# FASCICULE DE BREVET EUROPEEN

(11) **EP 3 254 046 B1**
(45) Date de publication et mention de la délivrance du brevet: **21.11.2018**
(21) Numéro de dépôt: 16703474.3
(22) Date de dépôt: 02.02.2016
(51) Int. Cl.: F28F 27/00, F16K 31/18, F16K 15/00, F16K 21/08, F28D 20/02, F28D 20/00

(54) **BATTERIE THERMIQUE A VANNE D'ARRET**
WÄRMEBATTERIE MIT ABSPERRVENTIL
THERMAL BATTERY WITH SHUT-OFF VALVE

(30) Priorité: 02.02.2015 FR 1550772
(43) Date de publication de la demande: 13.12.2017
(73) Titulaire: Valeo Systemes Thermiques, 78320 Le Mesnil Saint Denis (FR)
(72) Inventeur: TISSOT, Julien, 92800 Puteaux (FR); AZZOUZ, Kamel, 75012 Paris (FR)
(74) Mandataire: Neuviale, Bertrand
(86) Numéro de dépôt international: PCT/EP2016/052193
(87) Numéro de publication internationale: WO 2016/124603

(56) Documents cités:
- EP-A1- 0 806 556
- FR-A1- 2 713 279
- US-A- 5 435 277

## Description

La présente invention concerne le domaine des batteries thermique et plus particulièrement les batteries thermiques placées dans un circuit de gestion thermique d'un véhicule automobile. L'invention se rapporte en particulier à une batterie thermique telle que définie par le préambule de la revendication 1, et telle que divulguée par le document FR 2 713 279.

Les batteries thermiques sont généralement utilisées pour le chauffage de l'habitacle, notamment dans les véhicules électriques et hybrides ou alors pour le préchauffage d'un fluide caloporteur dans un circuit de gestion thermique. Les batteries thermiques peuvent également être utilisées pour le préchauffage de l'huile moteur ou de l'huile de boite de transmission automatique de véhicules à moteur à combustion interne.

Ces batteries thermiques sont généralement chargées en énergie calorifiques lors d'un roulage précédent du véhicule automobile et sont réutilisée plus tard dans le temps. L'enjeu pour ces batteries thermiques est donc de conserver l'énergie calorifique stockée suffisamment longtemps, pour que lors de la prochaine utilisation, celles-ci possèdent l'énergie calorifique nécessaire à sa fonction.

Une solution connue pour éviter la dissipation d'énergie calorifique est d'installer une isolation thermique tout autour de la batterie thermique. Différents types d'isolants peuvent être utilisés comme des mousses, des aérogels ou encore des isolants sous vide (type panneau d'isolation sous vide, double paroi etc...). Bien que certaines de ces solutions permettent d'obtenir une isolation efficace aux parois, les pertes thermiques par thermo-syphon et/ou par conduction, via le fluide traversant la batterie thermique, ne sont pas arrêtées.

Un des buts de la présente invention est de remédier au moins partiellement aux inconvénients de l'art antérieur et de proposer une batterie thermique à isolation améliorée.

La présente invention concerne donc une batterie thermique comportant un réservoir de stockage ainsi qu'un conduit d'entrée et un conduit de sortie d'un fluide, connectés à un circuit de circulation dudit fluide, ladite batterie thermique comportant en outre au moins deux vannes d'arrêt respectivement placées sur le conduit d'entrée et le conduit de sortie de fluide afin d'isoler le fluide contenu dans le réservoir de stockage lorsque le circuit de circulation dudit fluide est à l'arrêt,
lesdites vannes d'arrêt étant automatiques et comportant :
- une enceinte contenant du fluide et comportant une entrée et une sortie dudit fluide,
- un flotteur placé au sein de ladite enceinte et mobile entre :
   - une position haute où il flotte et obstrue au moins la sortie de fluide lorsque le circuit de circulation dudit fluide est à l'arrêt, et
   - une position basse où il est immergé et laisse le fluide circuler entre l'entrée et la sortie de fluide lorsque le circuit de circulation du fluide est en fonctionnement.

Du fait de la présence de ces vannes d'arrêts, les échanges thermiques entre le fluide contenu au sein du réservoir de stockage et celui contenu dans le circuit de circulation, sont donc limités ce qui améliore l'isolation thermique de la batterie thermique et donc améliore de fait la durée pendant laquelle elle peut conserver de l'énergie calorifique en son sein. De plus, grâce à la présence du flotteur, les vannes d'arrêt sont automatiques, c'est-à-dire qu'elles empêchent les reflux de fluide lorsque le circuit de circulation est à l'arrêt sans intervention extérieure.

Selon un aspect de l'invention, les vannes d'arrêt comportent un dispositif anti-blocage du flotteur de sorte à permettre la circulation du fluide entre une portion haute de l'enceinte située au dessus du flotteur et une portion basse de l'enceinte située au dessous du flotteur lors du déplacement dudit flotteur.

Selon un autre aspect de l'invention, le dispositif anti-blocage du flotteur est au moins une rainure réalisée sur la paroi intérieure de l'enceinte et reliant les portions basse et haute de l'enceinte.

Selon un autre aspect de l'invention, le dispositif anti-blocage du flotteur est au moins une rainure réalisée sur la paroi du flotteur et reliant les portions basse et haute de l'enceinte.

Selon un autre aspect de l'invention, le dispositif anti-blocage du flotteur est au moins un conduit traversant le flotteur et reliant les portions basse et haute de l'enceinte.

Selon un autre aspect de l'invention, le dispositif anti-blocage du flotteur est un circuit secondaire de fluide reliant la sortie de fluide de l'enceinte à la portion basse.

Selon un autre aspect de l'invention, le dispositif anti-blocage du flotteur comporte un guide dans lequel le flotteur peut coulisser entre sa position haute et sa position basse et une base percée, le guide et la base étant disposés à une certaine distance de la paroi de l'enceinte de sorte que le fluide puisse circuler entre la paroi de l'enceinte et le guide ainsi que sous la base.

Selon un autre aspect de l'invention, le flotteur est de forme cylindrique et l'intérieur de l'enceinte est également de forme cylindrique.

Selon un autre aspect de l'invention, le flotteur est de forme cylindrique avec une partie supérieure conique et l'intérieur de l'enceinte est également de forme cylindrique avec une portion haute conique.

Selon un autre aspect de l'invention, le flotteur est de forme sphérique et l'intérieur de l'enceinte est de forme cylindrique avec une portion haute sphérique.

Selon un autre aspect de l'invention, les vannes d'arrêt sont placées au sein même du réservoir de stockage.

Selon un autre aspect de l'invention, les vannes d'arrêt sont placées entre le réservoir de stockage et une couche d'isolation thermique.

D'autres caractéristiques et avantages de l'invention apparaîtront plus clairement à la lecture de la description suivante, donnée à titre d'exemple illustratif et non limitatif, et des dessins annexés parmi lesquels :
- les figures 1a et 1b montrent une représentation schématique d'une batterie thermique,
- les figures 2a et 2b montrent une représentation schématique d'une vanne d'arrêt selon un premier mode de réalisation,
- les figures 3a et 3b montrent une représentation schématique d'une vanne d'arrêt selon un deuxième mode de réalisation,
- les figures 4a et 4b montrent une représentation schématique d'une vanne d'arrêt selon un troisième mode de réalisation,
- les figures 5a et 5b montrent une représentation schématique d'une vanne d'arrêt selon un quatrième mode de réalisation,
- les figures 6a et 6b montrent une représentation schématique d'une vanne d'arrêt selon un cinquième mode de réalisation,

Sur les différentes figures, les éléments identiques portent les mêmes numéros de référence.

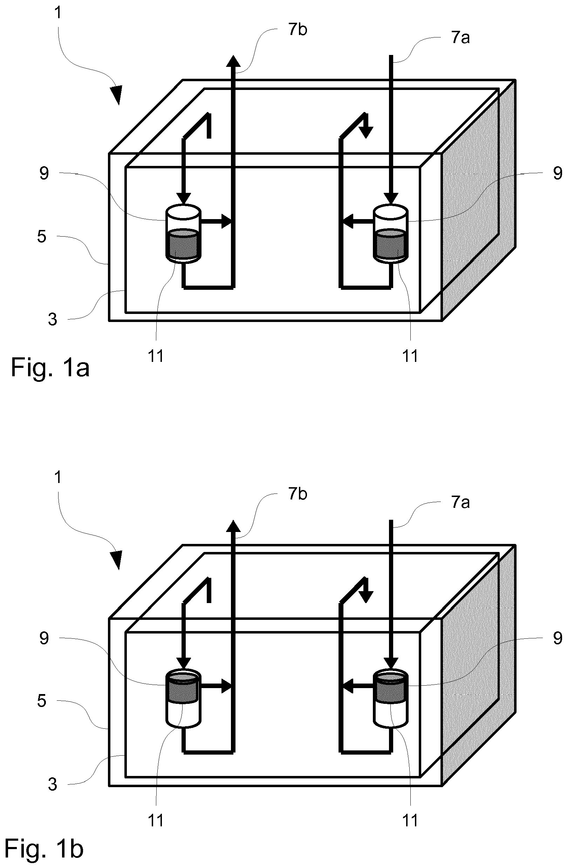

Comme le montrent les figures 1a et 1b, une batterie thermique 1 comporte généralement un réservoir de stockage 3 ainsi qu'un conduit d'entrée 7a et un conduit de sortie 7b d'un fluide. Ces conduits d'entrée 7a et de sortie 7b de fluide sont connectés à un circuit de circulation dudit fluide.

Le réservoir de stockage 3 peut par exemple permettre le stockage du fluide ou alors il peut contenir un matériau pouvant stocker de l'énergie calorifique tel qu'un matériau à changement de phase afin de réchauffer ou refroidir ledit fluide lorsque qu'il traverse la batterie thermique.

Afin d'isoler thermiquement le réservoir de stockage 3 de l'extérieur, ce dernier peut être entouré d'une couche d'isolation thermique 5.

La batterie thermique 1 comporte en outre au moins deux vannes d'arrêt 9. Les vannes d'arrêt 9 sont respectivement placées sur le conduit d'entrée 7a et le conduit de sortie 7b de fluide afin d'isoler le fluide contenu dans le réservoir de stockage 3 lorsque le circuit de circulation dudit fluide est à l'arrêt. La vanne d'arrêt 9 placée sur le conduit d'entrée 7a permet le passage du fluide depuis le circuit de circulation vers le réservoir de stockage 3 lorsque le circuit de circulation est en fonctionnement, mais lorsque le circuit de circulation est à l'arrêt, la vanne d'arrêt 9 empêche un reflux de fluide depuis le réservoir de stockage 3 vers le circuit de circulation. A l'inverse, la vanne d'arrêt 9 placée sur le conduit de sortie 7b permet le passage du fluide depuis le réservoir de stockage 3 vers le circuit de circulation lorsque le circuit de circulation est en fonctionnement, mais lorsque le circuit de circulation est à l'arrêt, la vanne d'arrêt 9 empêche un reflux de fluide depuis le circuit de circulation vers le réservoir de stockage 3.

Le fluide contenu au sein du réservoir de stockage 3 est donc isolé de celui contenu dans le circuit de circulation lorsque ce dernier n'est pas en fonctionnement. Les échanges thermiques entre le fluide contenu au sein du réservoir de stockage 3 et celui contenu dans le circuit de circulation, sont donc limités ce qui améliore l'isolation thermique de la batterie thermique 1 et donc améliore de fait la durée pendant laquelle elle peut conserver de l'énergie calorifique en son sein.

Afin de limiter d'autant plus les échanges thermiques avec l'extérieur, les vannes d'arrêt 9 sont de préférence disposées au sein même du réservoir de stockage 3 ou bien entre ce dernier et la couche d'isolation thermique 5.

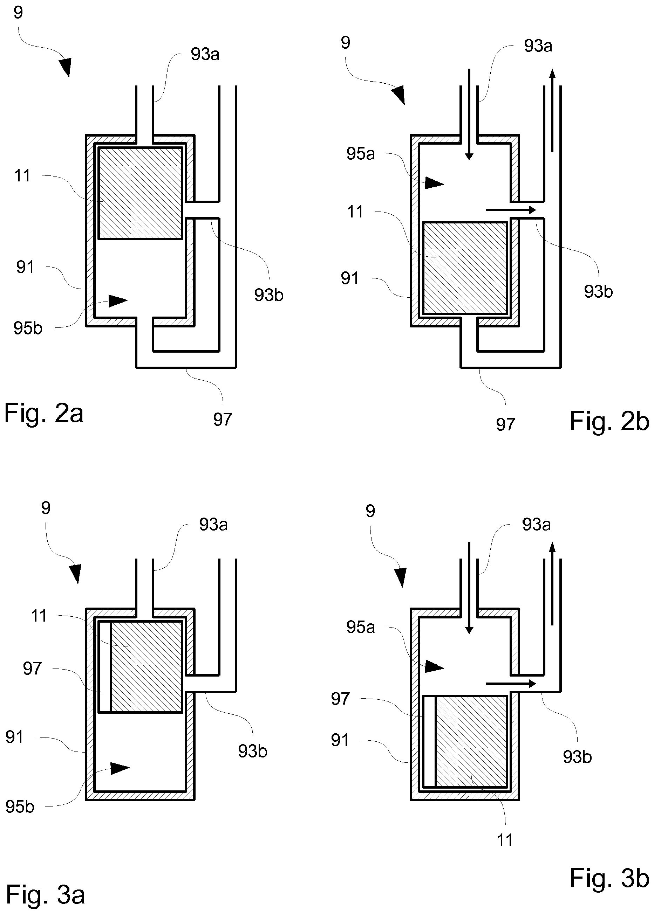

Comme le montrent plus en détail les figures 2a à 6b, les vannes d'arrêt 9 comportent une enceinte 91 contenant du fluide et comportant une entrée 93a et une sortie 93b dudit fluide. L'entrée 93a et la sortie 93b de fluide sont reliées soit au circuit de circulation soit au réservoir de stockage 3 selon la position de la vanne d'arrêt 9. La vanne d'arrêt 9 placée sur le conduit d'entrée 7a a ainsi son entrée 93a branchée au circuit de circulation et sa sortie 93b de fluide reliée au réservoir de stockage 3. A l'inverse, la vanne d'arrêt 9 placée sur le conduit de sortie 7b a son entrée 93a reliée au réservoir de stockage 3 et sa sortie 93b de fluide branchée au circuit de circulation.

Au sein de l'enceinte 91, les vannes d'arrêt 9 comportent un flotteur 11. Ce flotteur 11 est mobile entre :
- une position haute où il flotte et obstrue au moins la sortie 93b de fluide lorsque le circuit de circulation dudit fluide est à l'arrêt, comme illustré sur les figures 2a, 3a, 4a, 5a et 6a, et
- une position basse, lorsque le circuit de circulation du fluide est en fonctionnement, où il est immergé, du fait de la circulation du fluide qui le repousse, et laisse le fluide circuler entre l'entrée 93a et la sortie 93b de fluide, comme illustré sur les figures 2b, 3b, 4b, 5b et 6b.

Grâce à la présence du flotteur 11, les vannes d'arrêt 9 sont automatiques, c'est-à-dire qu'elles empêchent les reflux de fluide lorsque le circuit de circulation est à l'arrêt sans intervention extérieure.

Le flotteur 11 peut avoir différentes formes. Les figures 2a à 3b montrent un premier exemple de flotteur 11 de forme cylindrique. L'intérieur de l'enceinte 91 a une forme complémentaire et est donc également cylindrique pour permettre les mouvements du flotteur 11 entre ses deux positions.

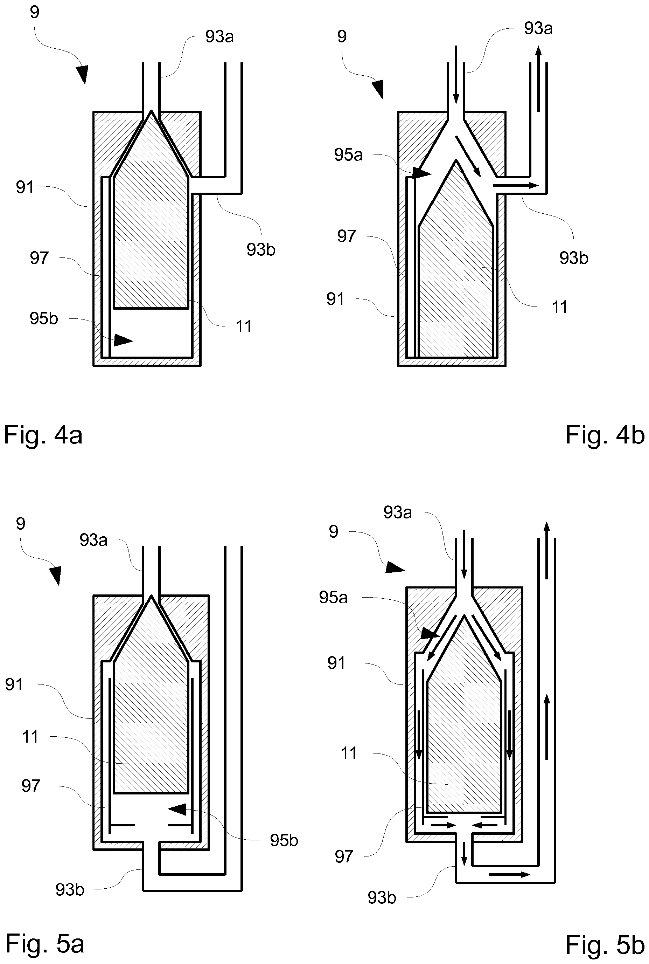

Les figures 4a à 5b montrent un deuxième exemple de flotteur 11 également de forme cylindrique mais avec une partie supérieure conique. Dans cet exemple l'intérieur de l'enceinte 91 est également complémentaire et est donc de forme cylindrique avec une portion haute 95a conique.

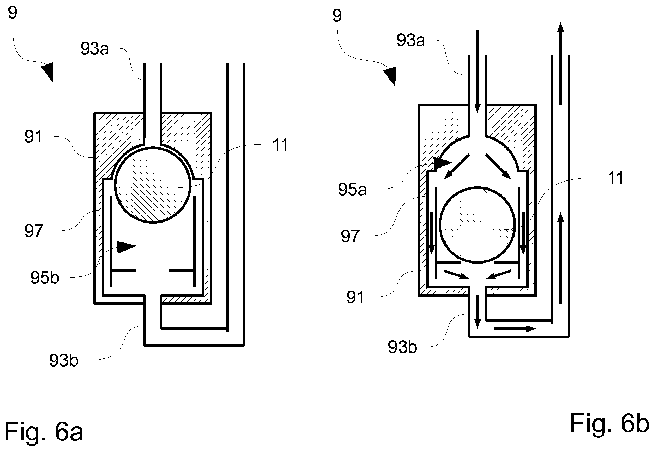

Les figures 6a et 6b montrent un troisième exemple de flotteur 11 de forme sphérique. Dans cet exemple l'intérieur de l'enceinte 91 est également complémentaire et est donc de forme cylindrique avec une portion haute 95a sphérique.

Les vannes d'arrêt 3 comportent en outre un dispositif anti-blocage 97 du flotteur 11. Ce dispositif anti-blocage 97 permet la circulation du fluide entre une portion haute 95a de l'enceinte 91 située au dessus du flotteur 11 et une portion basse 95b de l'enceinte 91 située au dessous du flotteur 11 lors du déplacement dudit flotteur 11. Ainsi le flotteur 11 peut passer de sa position haute à sa position basse et inversement sans qu'il y ait d'effet ventouse ou de résistance à son mouvement.

Selon un premier mode de réalisation illustré sur les figures 2a et 2b, le dispositif anti-blocage 97 du flotteur 11 est un circuit secondaire de fluide reliant la sortie 93b de fluide de l'enceinte 91 à la portion basse 95b.

Selon un deuxième mode de réalisation illustré aux figures 3a et 3b, le dispositif anti-blocage 97 du flotteur 11 est au moins une rainure réalisée sur la paroi du flotteur 11 et reliant les portions basse 95b et haute 95a de l'enceinte 91.

Une variante non représentée de ce mode de réalisation peut être que le dispositif anti-blocage 97 du flotteur 11 est au moins un conduit traversant le flotteur 11 et reliant les portions basse 95b et haute 95a de l'enceinte 91.

Selon un troisième mode de réalisation illustré aux figures 4a et 4b, le dispositif anti-blocage 97 du flotteur 11 est au moins une rainure réalisée sur la paroi intérieure de l'enceinte 91 et reliant les portions basse 95b et haute 95a de l'enceinte 91.

Selon un quatrième mode de réalisation illustré aux figures 5a à 6b, le dispositif anti-blocage 97 du flotteur 11 comporte un guide dans lequel le flotteur 11 peut coulisser entre sa position haute et sa position basse et une base percée. Le guide et la base sont disposés à une certaine distance de la paroi de l'enceinte 91 de sorte que le fluide puisse circuler entre la paroi de l'enceinte 91 et le guide ainsi que sous la base.

Ainsi, on voit bien que la batterie thermique 1 selon l'invention, du fait de la présence des vannes d'arrêt 9 et de leur conformation, permet une meilleure isolation thermique de ladite batterie thermique 1.

## Revendications

1. Batterie thermique (1) comportant un réservoir de stockage (3) ainsi qu'un conduit d'entrée (7a) et un conduit de sortie (7b) d'un fluide, connectés à un circuit de circulation dudit fluide, ladite batterie thermique (1) comportant en outre au moins deux vannes d'arrêt (9) respectivement placées sur le conduit d'entrée (7a) et le conduit de sortie (7b) de fluide afin d'isoler le fluide contenu dans le réservoir de stockage (3) lorsque le circuit de circulation dudit fluide est à l'arrêt,
**caractérisée en ce que** lesdites vannes d'arrêt (9) sont automatiques et qu'elles comportent :
- une enceinte (91) contenant du fluide et comportant une entrée (93a) et une sortie (93b) dudit fluide,
- un flotteur (11) placé au sein de ladite enceinte (91) et mobile entre :
• une position haute où il flotte et obstrue au moins la sortie (93b) de fluide lorsque le circuit de circulation dudit fluide est à l'arrêt, et
• une position basse où il est immergé et laisse le fluide circuler entre l'entrée (93a) et la sortie (93b) de fluide lorsque le circuit de circulation du fluide est en fonctionnement.

2. Batterie thermique (1) selon la revendication 1, **caractérisée en ce que** les vannes d'arrêt (3) comportent un dispositif anti-blocage (97) du flotteur (11) de sorte à permettre la circulation du fluide entre une portion haute (95a) de l'enceinte (91) située au dessus du flotteur (11) et une portion basse (95b) de l'enceinte (91) située au dessous du flotteur (11) lors du déplacement dudit flotteur (11).

3. Batterie thermique (1) selon la revendication 2, **caractérisée en ce que** le dispositif anti-blocage (97) du flotteur (11) est au moins une rainure réalisée sur la paroi intérieure de l'enceinte (91) et reliant les portions basse (95b) et haute (95a) de l'enceinte (91).

4. Batterie thermique (1) selon la revendication 2, **caractérisée en ce que** le dispositif anti-blocage (97) du flotteur (11) est au moins une rainure réalisée sur la paroi du flotteur (11) et reliant les portions basse (95b) et haute (95a) de l'enceinte (91).

5. Batterie thermique (1) selon la revendication 2, **caractérisée en ce que** le dispositif anti-blocage (97) du flotteur (11) est au moins un conduit traversant le flotteur (11) et reliant les portions basse (95b) et haute (95a) de l'enceinte (91).

6. Batterie thermique (1) selon la revendication 2, **caractérisée en ce que** le dispositif anti-blocage (97) du flotteur (11) est un circuit secondaire de fluide reliant la sortie (93b) de fluide de l'enceinte (91) à la portion basse (95b).

7. Batterie thermique (1) selon la revendication 2, **caractérisée en ce que** le dispositif anti-blocage (97) du flotteur (11) comporte un guide dans lequel le flotteur (11) peut coulisser entre sa position haute et sa position basse et une base percée, le guide et la base étant disposés à une certaine distance de la paroi de l'enceinte (91) de sorte que le fluide puisse circuler entre la paroi de l'enceinte (91) et le guide ainsi que sous la base.

8. Batterie thermique (1) selon l'une des revendications précédentes, **caractérisée en ce que** le flotteur (11) est de forme cylindrique et que l'intérieur de l'enceinte (91) est également de forme cylindrique.

9. Batterie thermique (1) selon l'une des revendications 1 à 7, **caractérisée en ce que** le flotteur (11) est de forme cylindrique avec une partie supérieure conique et que l'intérieur de l'enceinte (91) est également de forme cylindrique avec une portion haute (95a) conique.

10. Batterie thermique (1) selon l'une des revendications 1 à 7, **caractérisée en ce que** le flotteur (11) est de forme sphérique et que l'intérieur de l'enceinte (91) est de forme cylindrique avec une portion haute (95a) sphérique.

11. Batterie thermique (1) selon l'une des revendications précédentes, **caractérisée en ce que** les vannes d'arrêt (9) sont placées au sein même du réservoir de stockage (3).

12. Batterie thermique (1) selon l'une des revendications 1 à 10, **caractérisée en ce que** les vannes d'arrêt (9) sont placées entre le réservoir de stockage (3) et une couche d'isolation thermique (5).

## Patentansprüche

1. Wärmebatterie (1), umfassend einen Speichertank (3) sowie eine Fluideinlassleitung (7a) und eine Fluidauslassleitung (7b), die mit einem Zirkulationskreislauf des Fluids verbunden sind, wobei die Wärmebatterie (1) ferner mindestens zwei Absperrventile (9) umfasst, die jeweils auf der Fluideinlassleitung (7a) und der Fluidauslassleitung (7b) angeordnet sind, um das Fluid zu isolieren, das in dem Speicherbehälter (3) enthalten ist, wenn der Zirkulationskreislauf des Fluids im Stillstand ist, **dadurch gekennzeichnet, dass** die Absperrventile (9) automatisch sind und dass sie umfassen:
- einen Behälter (91), der Fluid enthält, und einen Fluideinlass (93a) und eine Fluidauslass (93b) umfasst,
- einen Schwimmer (11), der innerhalb des Behälters (91) angeordnet ist und bewegbar ist zwischen:
• einer oberen Position, in der er schwimmt und mindestens den Fluidauslass (93b) blockiert, wenn der Zirkulationskreislauf des Fluids im Stillstand ist, und
• einer unteren Position, in der er eingetaucht ist und das Fluid zwischen dem Fluideinlass (93a) und dem Fluidauslass (93b) zirkulieren lässt, wenn der Zirkulationskreislauf des Fluids in Betrieb ist.

2. Wärmebatterie (1) nach Anspruch 1, **dadurch gekennzeichnet, dass** die Absperrventile (3) eine Antiblockiervorrichtung (97) für den Schwimmer (11) umfassen, um die Zirkulation des Fluids zwischen einem oberen Abschnitt (95a) des Behälters (91), der oberhalb des Schwimmers (11) liegt, und einem unteren Abschnitt (95b) des Behälters (91), der unterhalb des Schwimmers (11) liegt, zu ermöglichen, während sich der Schwimmer (11) bewegt.

3. Wärmebatterie (1) nach Anspruch 2, **dadurch gekennzeichnet, dass** die Antiblockiervorrichtung (97) des Schwimmers (11) mindestens ein Kanal ist, der auf der Innenwand des Behälters (91) ausgebildet ist und den unteren (95b) und oberen (95a) Abschnitt des Behälters (91) verbindet.

4. Wärmebatterie (1) nach Anspruch 2, **dadurch gekennzeichnet, dass** die Antiblockiervorrichtung (97) des Schwimmers (11) mindestens ein Kanal ist, der an der Wand des Schwimmers (11) ausgebildet ist und den unteren (95b) und den oberen (95a) Abschnitt des Behälters (91) verbindet.

5. Wärmebatterie (1) nach Anspruch 2, **dadurch gekennzeichnet, dass** die Antiblockiervorrichtung (97) des Schwimmers (11) mindestens eine Leitung ist, die durch den Schwimmer (11) hindurchgeht und den unteren (95b) und oberen (95a) Abschnitt des Behälters (91) verbindet.

6. Wärmebatterie (1) nach Anspruch 2, **dadurch gekennzeichnet, dass** die Antiblockiervorrichtung (97) des Schwimmers (11) ein zweiter Fluidkreislauf ist, der den Fluidauslass (93b) des Behälters (91) mit dem unteren Abschnitt (95b) verbindet.

7. Wärmebatterie (1) nach Anspruch 2, **dadurch gekennzeichnet, dass** die Antiblockiervorrichtung (97) des Schwimmers (11) eine Führung, in der der Schwimmer (11) zwischen seiner oberen Position und seiner unteren Position gleiten kann, und eine perforierte Basis umfasst, wobei die Führung und die Basis in einem bestimmten Abstand von der Wand des Behälters (91) angeordnet sind, damit das Fluid zwischen der Wand des Behälters (91) und der Führung sowie unter der Basis zirkulieren kann.

8. Wärmebatterie (1) nach einem der vorhergehenden Ansprüche, **dadurch gekennzeichnet, dass** der Schwimmer (11) zylinderförmig ist und dass das Innere des Behälters (91) ebenfalls zylinderförmig ist.

9. Wärmebatterie (1) nach einem der Ansprüche 1 bis 7, **dadurch gekennzeichnet, dass** der Schwimmer (11) zylinderförmig mit einem konischen oberen Teil ist und dass das Innere des Behälters (91) ebenfalls zylinderförmig mit einem konischen oberen Abschnitt (95a) ist.

10. Wärmebatterie (1) nach einem der Ansprüche 1 bis 7, **dadurch gekennzeichnet, dass** der Schwimmer (11) kugelförmig ist und dass das Innere des Behälters (91) zylinderförmig mit einem kugelförmigen oberen Abschnitt (95a) ist.

11. Wärmebatterie (1) nach einem der vorhergehenden Ansprüche, **dadurch gekennzeichnet, dass** die Absperrventile (9) innerhalb des Speichertanks (3) angeordnet sind.

12. Wärmebatterie (1) nach einem der Ansprüche 1 bis 10, **dadurch gekennzeichnet, dass** die Absperrventile (9) zwischen dem Speichertank (3) und einer wärmeisolierenden Schicht (5) angeordnet sind.

## Claims

1. Thermal battery (1) including a storage vessel (3) as well as an inlet pipe (7a) and an outlet pipe (7b) for a fluid, that are connected to a circulation circuit for said fluid, said thermal battery (1) also including at least two shut-off valves (9) placed on the inlet pipe (7a) and the fluid outlet pipe (7b), respectively, in order to isolate the fluid contained in the storage vessel (3) when the circulation circuit of said fluid is shut off,
**characterized in that** said shut-off valves (9) are automatic and **in that** they include:
- an enclosure (91) containing the fluid and including an inlet (93a) and an outlet (93b) for said fluid,
- a float (11) placed inside said enclosure (91) that is moveable between:
• an upper position in which the float floats and obstructs at least the fluid outlet (93b) when the circulation circuit for said fluid is shut off, and
• a lower position in which the float is submerged and allows the fluid to flow between the inlet (93a) and the fluid outlet (93b) when the circulation circuit for the fluid is operational.

2. Thermal battery (1) according to Claim 1, **characterized in that** the shut-off valves (3) include an anti-blocking device (97) of the float (11) that enables the fluid to flow between an upper portion (95a) of the enclosure (91) located above the float (11) and a lower portion (95b) of the enclosure (91) located beneath the float (11) when said float (11) is moving.

3. Thermal battery (1) according to Claim 2, **characterized in that** the anti-blocking device (97) of the float (11) is at least one slot formed in the inner wall of the enclosure (91) that links the lower portion (95b) and the upper portion (95a) of the enclosure (91) .

4. Thermal battery (1) according to Claim 2, **characterized in that** the anti-blocking device (97) of the float (11) is at least one slot formed in the wall of the float (11) that links the lower portion (95b) and the upper portion (95a) of the enclosure (91).

5. Thermal battery (1) according to Claim 2, **characterized in that** the anti-blocking device (97) of the float (11) is at least one pipe passing through the float (11) that links the lower portion (95b) and the upper portion (95a) of the enclosure (91).

6. Thermal battery (1) according to Claim 2, **characterized in that** the anti-blocking device (97) of the float (11) is a secondary fluid circuit linking the fluid outlet (93b) of the enclosure (91) to the lower portion (95b).

7. Thermal battery (1) according to Claim 2, **characterized in that** the anti-blocking device (97) of the float (11) includes a guide, in which the float (11) can slide between the upper position of same and lower position of same, and a perforated base, the guide and the base being arranged at a given distance from the wall of the enclosure (91) such that the fluid can flow between the wall of the enclosure (91) and the guide, as well as beneath the base.

8. Thermal battery (1) according to one of the preceding claims, **characterized in that** the float (11) is cylindrical and the inside of the enclosure (91) is also cylindrical.

9. Thermal battery (1) according to one of Claims 1 to 7, **characterized in that** the float (11) is cylindrical with a conical upper portion, and **in that** the inside of the enclosure (91) is also cylindrical with a conical upper portion (95a).

10. Thermal battery (1) according to one of Claims 1 to 7, **characterized in that** the float (11) is spherical, and **in that** the inside of the enclosure (91) is cylindrical with a spherical upper portion (95a).

11. Thermal battery (1) according to one of the preceding claims, **characterized in that** the shut-off valves (9) are placed inside the storage vessel (3).

12. Thermal battery (1) according to one of Claims 1 to 10, **characterized in that** the shut-off valves (9) are placed between the storage vessel (3) and a layer of thermal insulation (5).
